Europäisches Patentamt

European Patent Office

Office européen des brevets

(11) Publication number: **0 462 079 A1**

# (12) EUROPEAN PATENT APPLICATION

(21) Application number: **91830250.6**

(22) Date of filing: **10.06.91**

(51) Int. Cl.⁵: **F16L 37/08**

(30) Priority: **12.06.90 IT 4805190**

(43) Date of publication of application:
**18.12.91 Bulletin 91/51**

(84) Designated Contracting States:
**AT BE CH DE DK ES FR GB GR LI LU NL SE**

(71) Applicant: **MINISTERO DELL' UNIVERSITA' E DELLA RICERCA SCIENTIFICA E TECNOLOGICA**
**76, Lungotevere Thaon di Revel**
**I-00196 Roma (IT)**

(72) Inventor: **Meloni, Stefano, c/o Merloni Termosanitari S.p.A.**
**Viale Aristide Merloni 45**
**I-60044 Fabriano (AN) (IT)**
Inventor: **Mariani, Enrico, c/o Merloni Termosanitari S.p.A.**
**Viale Aristide Merloni 45**
**I-60044 Fabriano (AN) (IT)**

(74) Representative: **Iannone, Carlo Luigi et al**
**Ing. Barzanò & Zanardo Roma S.p.A. Via Piemonte, 26**
**I-00187 Roma (IT)**

(54) **Quick jointing elements to couple pipes.**

(57)   This invention relates to a quick jointing element to couple pipes, said element comprising a hollow body (1), sealing members (4, 4', 4''; 10, 10') arranged within housings (3 ; 11, 11') obtained inside said body (1), and an elastic clamp (7) arranged at the end of said jointing element that couples with the pipe (6), at the point corresponding to a reduction in the inner cross-section of the body (1) itself, said clamp being provided with an elastic end inside the body (1) which is provided with projecting means for locking the pipe (6), as well as pipe elements which are provided with said jointing elements at one of their ends or at both of them and/or on one or more branches of said pipe elements themselves.

EP 0 462 079 A1

FIG. 1

This invention relates to quick jointing elements to couple pipes.

More particularly, this invention relates to jointing elements, which are threadingless and merely pressure-working, and which are both structurally and operatively pre-arranged so as not to require particular devices during the assembling step so that they allow an extremely quick assembling operation, said jointing elements also being disassemblable with no damage to them and to the pipes, and also being capable of accommodating themselves to thermal expansions.

The solutions available for realizing the jointing of pipes, be they built with a plastic material or with a metallic material, are well known to those engaged in this field.

All such solutions ask for works in a building yard and they give rise to fixed jointing elements which are difficult to disassemble and to re-employ again.

Moreover, in most cases it is necessary to cut in an extremely accurate way the pipe to be connected, because the coupling system is uncapable of accommodating an excess length od the pipe itself.

Obviously, this need for a very high precision cut gives rise to remarkable problems that are to be faced by the worker.

An additional drawback which is characteristic of the connecting members presently commercially available consists in that the jointing member cannot be employed if thermal expansions of the pipes are to be taken necessarily into consideration, in particular as regards metallic pipes.

This problem, which is usually neglected in plants for civil uses, is definitely important. It is sufficient to consider that a column assembled on a five-floor building can undergo motions even of 10-20 mm. This does not give rise to severe mechanical problems, but annoying creakings are produced at any change in temperature.

These and other problems are solved according to the present invention in which the realization is provided of quick jointing elements that do not ask for specific devices in the building yard and that allow the connections to be rapidly assembled and disassembled with the possibility of employing the elements themselves again.

Moreover, the solution suggested according to the present invention is capable of ensuring the absorption of thermal expansions arising in the pipes themselves.

Moreover, it is an object of the present invention that of realizing pipe members provided with quick jointing elements at one of their ends or at both their ends, and which are possibly provided with one or more side connections, for branches, said connected branches being also previously arranged with quick jointing elements.

Accordingly, it is a specific object of this invention a quick jointing element for coupling pipes, said element comprising a hollow body, sealing elements arranged within housings obtained inside said body, and an elastic clamp which is positioned at the end of said jointing element which couples with said pipe, at the point corresponding to a reduction in the inner section of the body itself, said clamp being provided with an elastic end inside said body and bearing projecting means for locking the pipe itself.

Preferably, said body is obtained directly on a length of the pipe, at the end of such pipe or as a branch of the same.

According to a first kind of embodiment of the jointing element according to this invention, said sealing elements are made up of gaskets spaced at intervals by spacing members, all of them being arranged inside the same cavity, said spacing members forming the sliding guide of the pipe itself, and at least one of said gaskets which are preferably two in number will be of the lip type.

According to a second kind of embodiment of the jointing element of this invention, said sealing members are made up of a single lip-type gasket.

Again according to this invention, said sealing members can also consist of at least two gaskets arranged within separate cavities obtained within the body of the jointing element.

The cavity of the gasket which is closest to the elastic ends of the clamp can be so shaped as to house also said ends.

The jointing element according to this invention can have its body as realized with a metallic material like for instance copper or steel, or otherwise with a plastic material, like for instance cross-linked polyethylene or polypropylene and such element can be employed for connecting both plastic material pipes and metallic material pipes.

The locking elastic clamp will preferably be realized with a highly elastic and highly strong material.

In the case of connections of metallic pipes, a groove is obtained outside the connection itself, at the end of the same that is inserted into the jointing element, and the projecting means of said elastic clamp are inserted into said groove.

On the contrary, if plastic material pipes are connected, a metallic insertion member, preferably a brass insertion member, is inserted into such pipes before the insertion into the jointing element.

Moreover, the present invention also relates to pipe elements which are provided with jointing elements having the same features as those described above on one of their ends or on both of them, and/or on one or more branches of them.

In the case of jointing elements of vertical metallic pipes, it is preferable to provide a pipe element having at its two ends the jointing elements as already explained above, but one of said two elements should be free from an elastic clamp so as to allow the pipe thermal expansions to occur.

As can be easily understood and as can be easily inferred from the following disclosure, the solution suggested herein allows pipes of any type to be quickly coupled without any need for particular devices and without the need for cutting the pipe itself in an accurate way, so that in addition the junction can be easily disassembled and reassembled.

This invention will be disclosed in the following according to some preferred embodiments of the same with particular references to the figures of the enclosed drawings wherein:

Figure 1 is a lenghtwise cross-sectional view of a first embodiment of a jointing element according to the invention;

Figure 2 is a lengthwise cross-sectional view of a second embodiment of a jointing element according to the invention;

Figures 3a, 3b and 3c show the lengthwise cross-sectional views of three steps in the coupling between a pipe and the jointing element of Figure 1;

Figure 4 shows the lengthwise cross-sectional view of a coupling between a pipe element having two jointing elements on its two ends according to this invention, and two pipe lengths to be connected;

Figures 5a, 5b and 5c show the sequence of coupling of elements according to Figure 4;

Figures 6 and 7 are lengthwise partial cross-sectional views of two further embodiments of jointing elements according to this invention;

Figure 8 shows a pipe element with two axial quick couplings and a quick coupling branch; and

Figure 9 shows a pipe element with a quick axial coupling and a quick coupling branch.

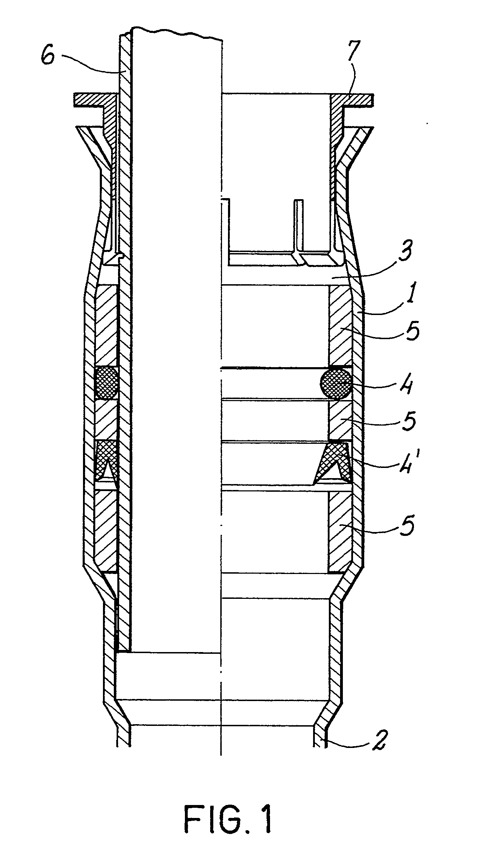

With reference now to Figures 1, 3a, 3b, 3c and 4, a jointing element is shown having a body 1 obtained from a pipe length 2 of a suitable diameter and a suitable thickness, for instance through a hydroforming process.

Said jointing element is provided with a cavity 3 in which the gaskets 4 and 4' as well as the respective spacing members 5 are housed, said spacers being also employed for centering the pipe 6 to be connected.

The cavity 3 shows a reduction in cross-section close to the outside terminal part of the jointing element, and then it shows an immediate re-enlargement of the cross-section itself.

At the points corresponding to said reduction in the cross-section of the cavity 3, and elastic clamp 7 is arranged that allows the pipe 6 to be inserted, so as to prevent the pipe itself from going out unless an action is exerted on its outside part, causing the same to widen.

The gasket 4' is a lip-type gasket in order to ensure a better sealing action.

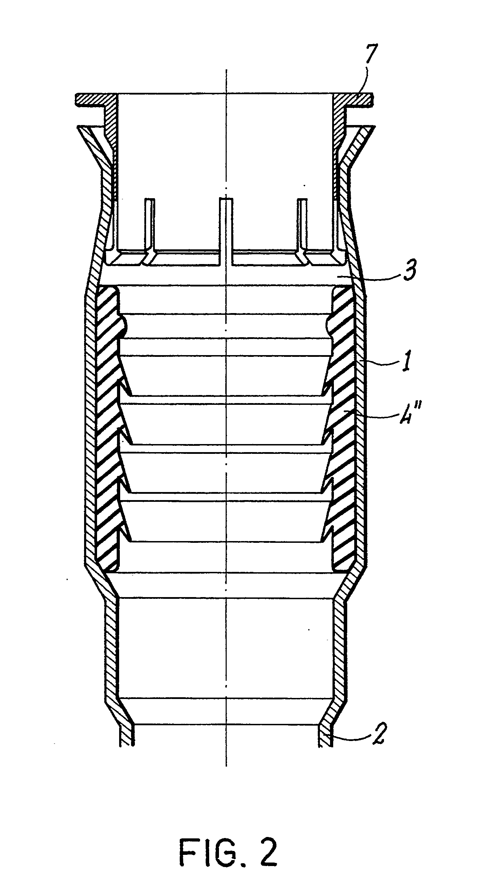

A single lip-type gasket 4" can be employed instead of the gaskets 4 and 4' as well as of the spacers 5, as is shown in Figure 2.

The solution shown in Figure 1, which is preferably adopted for jointing pipes made up of metallic materials, provides the realization of an outer notch 8 in the pipe 6, so that the projecting part provided on the inner end of the clamp 7 engages with said notch.

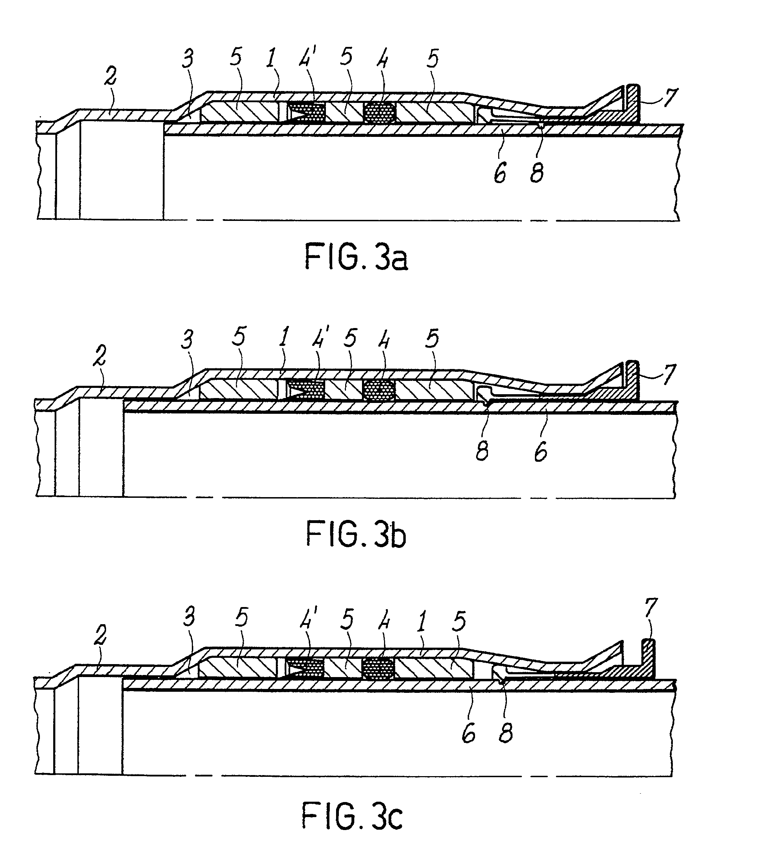

With reference now to Figures 3a-3c, it can be observed that, inserting the pipe 6 into the jointing element according to this invention, the clamp 7 slides along the surface itself of the pipe 6 (Figure 3a) so as to allow the same to be inserted.

When the clamp 7 meets with said notch 8, it goes into the notch so locking the pipe 6 in position (Figure 3b).

The pipe 6 and the clamp 7 as a result of water pressure are both pushed toward the outside but they are kept by said reduction in the cross-section of the cavity 3.

Just the same effects are obtained with a different gasket type as for instance the gasket shown in Figure 2.

The notch 8 may also be lacking because said clamp 7 ensures anyway the locking effect of the pipe 7 through friction. Anyway, said notch is not realized if the pipe 6 is made up of a plastic material.

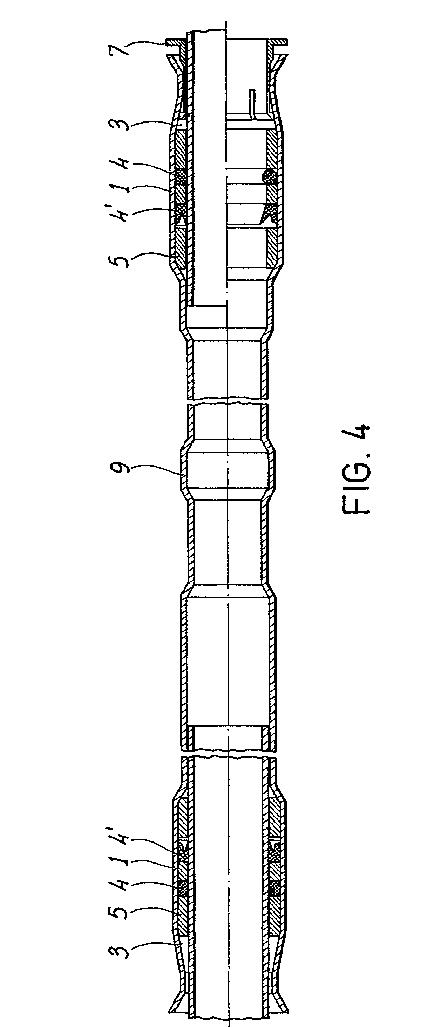

Figure 4 shows a solution which is particularly suitable for connecting vertical pipes which are made up of a metallic material.

A pipe element 9 is provided at the two ends with two jointing elements according to this invention which are realized as specular elements.

The main difference consists in the fact the jointing element on the right of the Figure is provided with a clamp 7, whereas the jointing element on the left lacks a clamp so as to allow the thermal expansions in the pipe 6 to freely occur.

In case of a pipe 6 made up of a plastic material, both the jointing elements must be provided with a clamp 7 because thermal expansions can be accommodated quite well by changes in the shape of the pipe itself.

As already mentioned above, said notch 8 for metallic material pipes 6 can be provided or not, whereas said notch must not be provided if said pipes are made up of a plastic material.

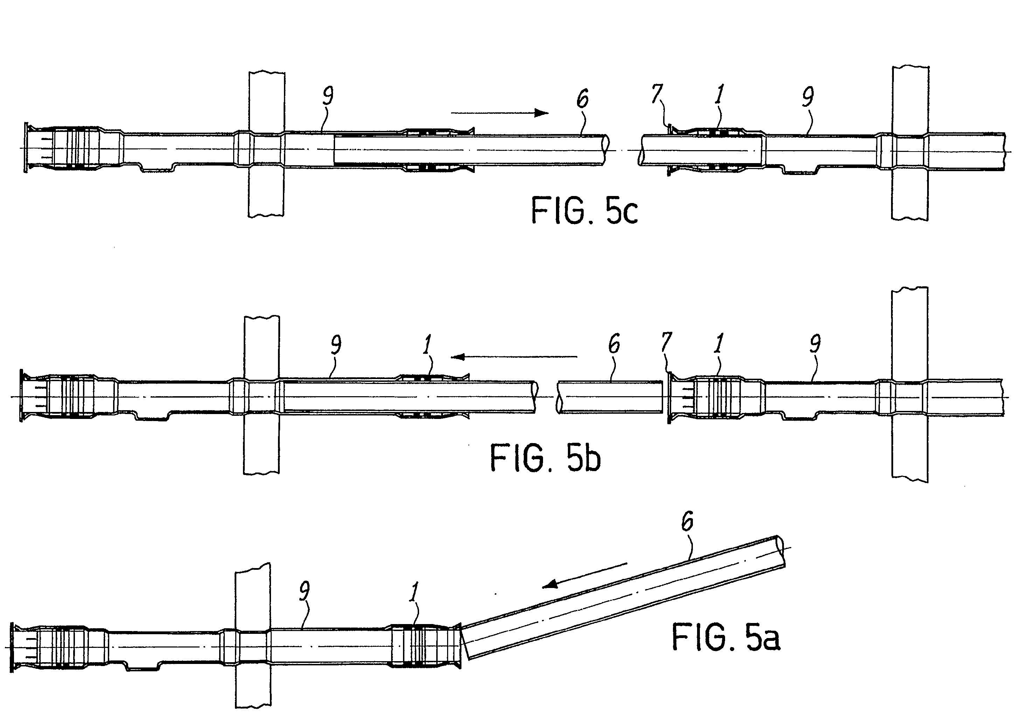

Figures 5a, 5b and 5c show an assembling sequence that provides first the insertion of a pipe 6 into a clamp-lacking jointing element (Figure 5a), then its coupling, at the other end, with a jointing element according to this invention which is provided with a clamp and belongs to another pipe element 9 (Figure 5b), and then the locking of the pipe itself (Figure 5c).

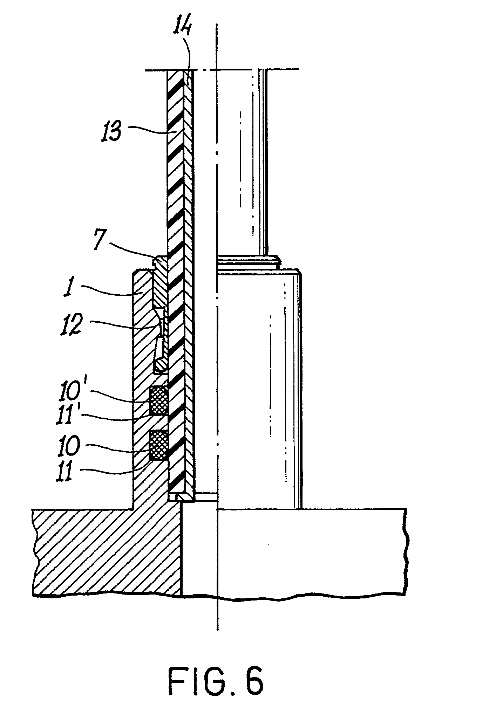

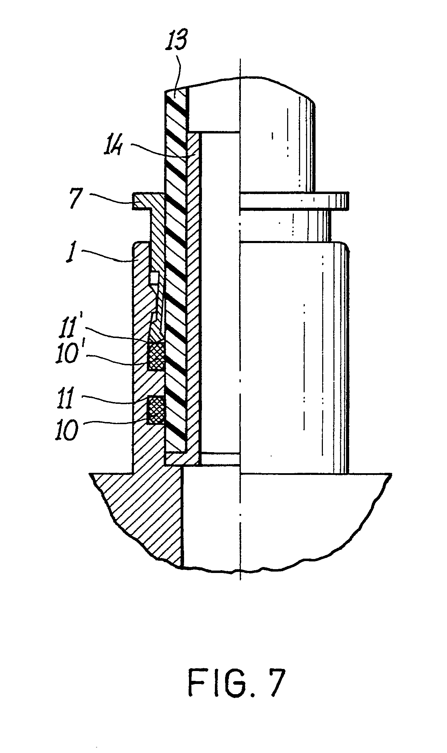

With reference now to Figures 6 and 7, two more embodiments of jointing elements according to this invention are shown.

In the solution of Figure 6, two gasket members 10 and 10' are arranged within corresponding cavities 11 and 11' obtained in the body 1 of the jointing element.

Moreover, a clamp 7 is provided at the point corresponding to the reduction 12 in the body 1 itself.

The jointing element shown is studied in particular for branches and for its employment in connection with a pipe 13 made up of a plastic material.

To that aim, a brass insertion member 14 is inserted into the pipe 13 before the pipe itself is inserted into the jointing element, said brass member being employed to fix substantially the diameter of the pipe itself.

Obviously, the same solution can be adopted with pipes 13 made up of a metallic material, in which case it is not necessary to provide the insertion member 14, whereas it might be suitable to provide the outer notch of the pipe itself.

The solution shown in Figure 7 differs from the preceding one in that the inner end of the clamp 7 is within the same cavity 11' as that of the gasket 10', so that the latter, cooperating on the shape of the end of the clamp 7, will determine the widening when the pipe 13 is to be extracted.

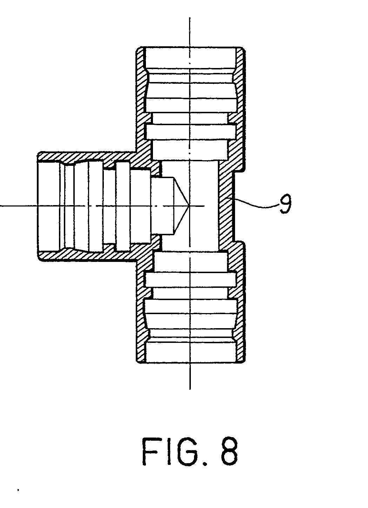

Figure 8 shows a pipe element 9 that provides two jointing elements according to the present invention on the main axis of the pipe, and a side branch.

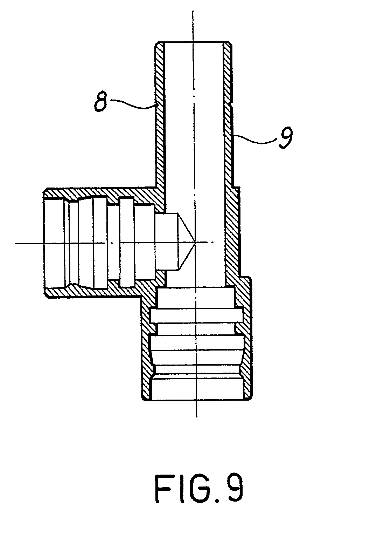

Figure 9 shows on the contrary a pipe element 9 in which a side branch and a quick jointing element on the main axis are provided, while a notch has been realized in the pipe itself at the opposite end of the same for coupling said pipe with a further pipe element 9.

This invention has been disclosed with specific reference to some preferred embodiments of the same, but it is to be understood that modifications and/or changes can be introduced in the same by those who are skilled in the art, without departing from the spirit and scope of the invention for which a priority right is claimed.

## Claims

1. A quick jointing element for coupling pipes, said element being characterized in that it comprises a hollow body; sealing members arranged within housings obtained inside said body; and an elastic clamp arranged at the end of said jointing element that couples with the piping itself, at the points corresponding to a reduction in the inner cross-section of the body itself, said clamp being also provided with an elastic end, inside said body, which end also bears projecting means for locking the pipe.

2. A jointing element according to claim 1, characterized in that said body is obtained directly on a pipe length, at the end of the same or as a branch of the pipe itself.

3. A jointing element according to any one of the preceding claims, characterized in that said sealing elements are made up of gaskets which are separated at intervals by spacing members, all said spacing members being placed inside a same cavity, said spacing members also forming the sliding guide of the pipe itself.

4. A jointing element according to claim 3, characterized in that two gaskets are provided, at least one of them being of the lip-type.

5. A jointing element according to any one of the preceding claims 1 or 2, characterized in that said sealing members are made up of a single gasket of the multi-lip type.

6. A jointing element according to any one of the preceding claims 1 or 2, characterized in that said sealing members consist of at least two gaskets arranged within separate cavities and obtained in the body of the jointing element itself.

7. A jointing element according to claim 6, characterized in that the gasket cavity which is closest to the elastic ends of the clamp is so shaped as to house said ends also.

8. A jointing element according to any one of the preceding claims, characterized in that said body is made up of a metallic material like for instance copper or steel.

9. A jointing element according to any one of the preceding claims 1-7, characterized in that said body is made up of a plastic material, like for instance polypropylene or crosslinked polyethylene.

10. A jointing element according to any one of the preceding claims, characterized in that said locking elastic clamp is made up of a material endowed with a high elasticity and a good mechanical strength.

11. A Jointing element according to any one of the preceding claims, characterized in that in case of connections of metallic pipes, a groove is obtained in the end of the pipe itself, on its outside part, into which groove the projecting means of the elastic clamp are inserted.

12. A jointing element according to any one of the preceding claims 1-10, characterized in that in case of connections of pipes made up of a plastic material, a metallic insertion member as for instance in particular a brass insertion member is inserted into the end of the pipe to be coupled.

13. Pipe elements characterized in that jointing elements according to any one of the preceding claims are provided on one of their ends or on both ends of them, and/or on one or more branches of said pipe elements.

FIG. 1

FIG. 2

FIG. 3a

FIG. 3b

FIG. 3c

FIG. 4

EP 0 462 079 A1

FIG. 5c

FIG. 5b

FIG. 5a

FIG. 6

FIG. 7

FIG. 8

FIG.9

EP 0 462 079 A1

European Patent Office

**EUROPEAN SEARCH REPORT**

Application Number

EP 91 83 0250

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-1 911 064 (J. VANDERHOVEN) * Pages 6,7; figures 4-8 * | 1,2,6,7 ,13 | F 16 L 37/08 |
| A | | 10 | |
| X | EP-A-0 333 094 (M. PASBRIG) * Column 2, lines 22-41; column 6, lines 5-8; figures 1-3 * | 1,2,8- 10,13 | |
| A | | 7 | |
| X | US-A-2 182 797 (S.V. DILLON) * Page 2, left-hand column, lines 30-66; figures 1-7 * | 1,2,6, 13 | |
| A | | 4 | |
| A | US-A-4 913 467 (WASHIZU) * Abstract; column 1, lines 30-32; figures 3,11 * | 1-3,13 | |
| A | GB-A-1 117 943 (SMITH & DAVIS LTD) * Page 3, lines 28-65; figures * | 1,5 | |
| A | EP-A-0 287 791 (TECHNO-CHEMIE KESSLER & CO.) * Column 4, lines 19-42; figures * | 1,2,11, 13 | TECHNICAL FIELDS SEARCHED (Int. Cl.5) F 16 L |
| A | GB-A-2 217 419 (RASMUSSEN GmbH) * Abstract; figures 3,4 * | 1,12 | |

The present search report has been drawn up for all claims

| Place of search | Date of completion of the search | Examiner |
|---|---|---|
| THE HAGUE | 10-09-1991 | NEUMANN E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

16